# EUROPÄISCHE PATENTSCHRIFT

(11) **EP 0 791 997 B1**
(45) Veröffentlichungstag und Bekanntmachung des Hinweises auf die Patenterteilung: **26.05.1999**
(21) Anmeldenummer: 97102791.7
(22) Anmeldetag: 20.02.1997
(51) Int. Cl.: H02G 3/26, F16L 3/23

(54) **Befestigungselement aus Kunststoff**
Fastening element made of plastics
Elément de fixation en matière plastique

(30) Priorität: 26.02.1996 DE 19607205
(43) Veröffentlichungstag der Anmeldung: 27.08.1997
(73) Patentinhaber: TRW Automotive Electronics & Components GmbH & Co. KG, 78315 Radolfzell (DE)
(72) Erfinder: Kraus, Willibald, 67269 Grünstadt (DE)
(74) Vertreter: Eder, Eugen, Dipl.-Ing.

(56) Entgegenhaltungen:
- CH-A- 571 674
- DE-A- 4 324 466
- FR-A- 2 717 554
- US-A- 4 870 722

## Beschreibung

Die Erfindung bezieht sich auf ein Befestigungselement aus Kunststoff, insbesondere für Leitungsstränge oder Rohre, mit einem an einem Träger befestigbaren, schalenförmigen Halter und mindestens einer die Leitungsstränge zumindest teilweise umgreifenden, flexiblen Lasche.

Als Stand der Technik ist bereits ein Befestigungselement bekannt (DE 43 24 489 A1), bei welcher die den Leitungssträngen zugekehrten Seite der flexiblen Lasche mit Klebematerial beschichtet ist. Diese Klebematerial ist direkt auf die den Leitungssträngen zugekehrten Seite des Halteelements aufgebracht. Hierdurch erfahren die Leitungsstränge eine Halterung, welche jedoch von Material zu Material unterschiedlich ist.

Weitere bekannte Leitungshalter (US-PS 4,457,053, FR-PS 1 508 235) weisen jeweils flexible Laschen auf, welche über die Leitungsstränge umgebogen werden. Auch hier hängt der Grad der Halterung von dem jeweiligen Material der Leitungsstränge bzw. dem Biegewinkel ab.

Dem gegenüber besteht die Aufgabe der vorliegenden Erfindung darin, ein Befestigungselement der eingangs genannten Art zu schaffen, welches trotz schonender Halterung der Leitungsstränge diese einwandfrei an einem Träger befestigt.

Diese Aufgabe wird erfindungsgemäß dadurch gelöst, daß die Lasche Teil einer in den schalenförmigen Halter eingebetteten Einlage ist, daß der Halter an seiner der Lasche gegenüberliegenden Seite mit einem Rastelement zum Halten der Lasche in Schließstellung versehen ist und daß die Einlage mit dem Halter im 2-Komponenten-Spritzverfahren hergestellt ist.

Durch die Verwendung des 2-Komponenten-Spritzverfahrens ergibt sich ein kostensparendes Herstellungsverfahren hoher Effektivität, wobei vorzugsweise der Halter aus dem harten Material und die Einlage, d.h. der den Leitungssträngen zugekehrter Bereich aus weicherem Kunststoffmaterial bestehen.

Es besteht die Möglichkeit, daß eine Lasche einstückig mit der Einlage verbunden ist; alternativ können zwei im Abstand voneinander angeordnete Laschen einstückig mit der Einlage verbunden sein. Diese beiden Laschen können entweder in Schließstellung parallel verlaufen oder kreuzförmig über die Leitungsstränge gelegt und an den entsprechenden Rastelementen befestigt werden.

Zur Verbindung des Halters mit einem Träger kann dieser in dem dem Träger zugewandten Bereich mindestens ein Halteelement aufweisen, welches beispielsweise als Profilzapfen, als federnder Rastarm, als Zylindereinsatz oder als Aufnahmeteil für einen mit dem Träger verbundenen Gewindebolzen ausgebildet sein. Darüber hinaus kann dieses Halteelement mit einem umlaufenden Dichtlippe versehen sein, um eine Trägeröffnung dichtend abzudecken.

Die Rastelemente können entweder hakenförmig oder druckknopfartig ausgebildet sein; in jedem Fall müssen sie so gestaltet sein, daß sie die Laschen in Schließstellung funktionssicher haltern.

Die Erfindung wird nachfolgend anhand von in der Zeichnung dargestellten Ausführungsbeispielen näher beschrieben. In der Zeichnung zeigen:
- Fig. 1a: eine perspektivische Ansicht des erfindungsgemäßen Befestigungselements mit verschiedenen Varianten der Gestaltung der Rastelemente und der Halteelemente,
- Fig. 1b: eine Darstellung einer einzigen Lasche, teils gebrochen,
- Fig. 2: eine Seitenansicht des Halteelements in einer weiteren Ausführungsform, in Schließstellung.

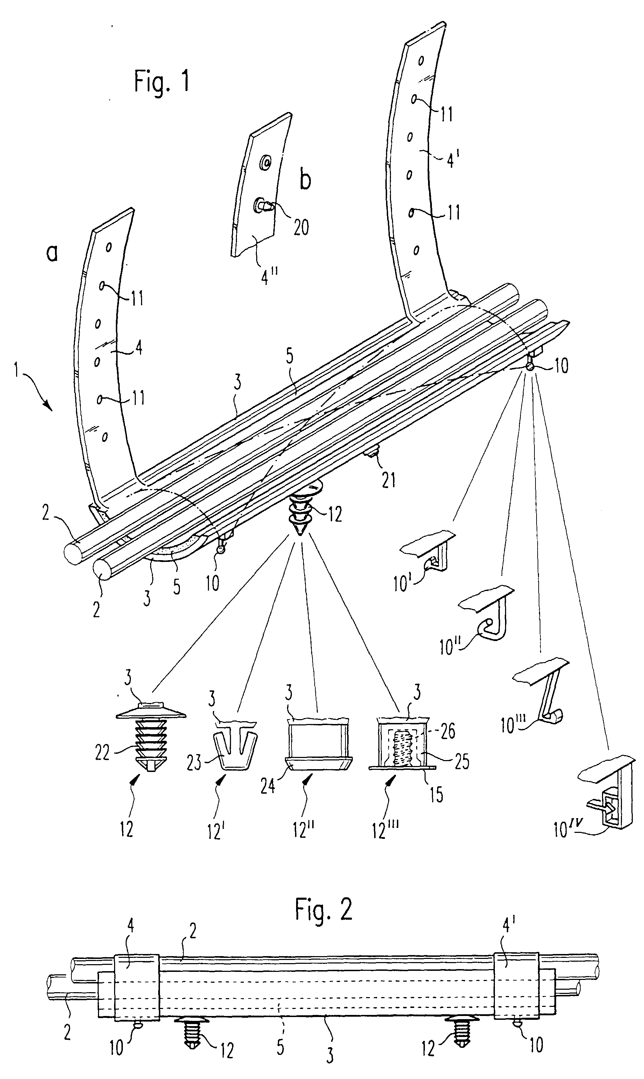

Fig. 1a zeigt ein erfindungsgemäßes Befestigungselement 1 aus Kunststoff, welches insbesondere zur Befestigung von Leitungssträngen 2 oder Rohren an einem Träger dient. Dieses Befestigungselement 1 besteht aus einem schalenförmigen Halter 3 und bei der Ausführungsform nach Fig. la aus zwei die Leitungsstränge 3 übergreifenden, flexiblen Laschen 4, 4'. Diese Laschen 4 und 4' sind Teil einer in den schalenförmigen Halter 3 eingebetteten Einlage 5. Der Halter 3 und die Einlage 5 sind in einem Arbeitsgang im 2-Komponenten-Spritzverfahren hergestellt. Hierbei besteht vorteilhafterweise der Halter 3 aus einer harten Schale, wohingegen die Einlage 5 aus einem weicheren Kunststoffmaterial hergestellt ist.

Der Halter 3 weist an seiner der Lasche 4, 4' gegenüberliegenden Seite nach Fig. la Rastelemente 10 auf. Darüber hinaus besitzt der Halter 3 in dem einen Träger zugewandten Bereich mindestens ein mit dem Träger verbindbares Halteelement 12.

Dieses Halteelement 12 läßt sich in eine Öffnung des Trägers einsetzen.

Nach Einlegen der Rohre bzw. Leitungsstränge 2 in die Einlage 5 des Befestigungselements 1 werden die Laschen 4 und 4' um die Rohre bzw. die Leitungsstränge 2 gelegt, und in dieser Schließstellung fixiert; dieses Fixieren erfolgt dadurch, daß beispielsweise jede der Laschen 4 und 4' Öffnungen 11 aufweist, wobei jeweils eine Öffnung der Lasche 4 bzw. 4' hinter einer Verdickung des Rastelements 10 eingedrückt wird. Da eine Anzahl von Öffnungen 11 in jeder der Laschen 4 und 4' vorgesehen sind, lassen sich eine entsprechend größere und kleinere Anzahl von Leitungssträngen oder Rohren 2 an dem Befestigungselement 1 befestigen.

Die Laschen 4 und 4' lassen sich entweder parallel oder kreuzweise über die Rohre 2 bzw. Leitungsstränge legen bzw. in die Schließstellung verbringen.

Die Rastelemente 10 können, wie in Fig. la dargestellt, beispielsweise als Haken 10', als Eingriffsbügel 10'', als Gegenrast 10''' oder als Einschnappteil 10^{IV} ausgebildet sein.

Bezüglich der Gestaltung des Befestigungselements 12, 12', 12'', 12''' sind ebenfalls mehrfache Varianten denkbar, beispielsweise in Form eines Profilzapfens 22, in Form zweier einander gegenüberliegender, federnder Rastarme 23, als Zylindereinsatz 24 oder als Aufnahmeteil 25 für einen an einem Träger 15 befestigten Gewindebolzen 26.

Statt der in Fig. 1a dargestellten Ausführungsform mit zwei Laschen 4 und 4' ist es auch möglich, nach Fig. lb lediglich beispielsweise im mittleren Bereich eine Lasche 4'' vorzusehen, welche z.B. ein Rastelement 20 besitzt, das in einer entsprechenden Gegenrast 21 an dem Außenumfang des Halters 3 in Schließstellung eingreift.

In Fig. 1a ist lediglich ein einziges Halteelement 12 vorgesehen.

Nach Fig. 2 besteht auch die Möglichkeit, daß beispielsweise zwei im Abstand voneinander liegende Befestigungselemente 12 vorhanden sind, welche vorzugsweise im Bereich der Laschen 4 und 4' liegen.

Durch die besondere Gestaltung des Befestigungselements 1 mit aus hartem Kunststoffmaterial bestehenden schalenförmigen Halter 3 und aus weicherem Kunststoffmaterial bestehender Einlage 5 mit angeformten Laschen 4 und 4' bzw. 4'' sowie der parallelen bzw. kreuzweisen Befestigungsmöglichkeit der Laschen in Schließstellung ergibt sich ein einfach aufgebautes, aber sehr wirkungsvolles Produkt, durch welches beispielsweise auf dem Gebiet der Kraftfahrzeugindustrie an beliebigen Stellen eines Kraftfahrzeuges Leitungsstränge 2 bzw. Rohre funktionssicher gehaltert werden.

## Patentansprüche

1. Befestigungselement aus Kunststoff, insbesondere für Leitungsstränge (2) oder Rohre, mit einem an einem Träger befestigbaren, schalenförmigen Halter (3) und mindestens einer die Leitungsstränge (2) zumindest teilweise umgreifenden, flexiblen Lasche (4,4',4"),
**dadurch gekennzeichnet,**
daß die Lasche (4, 4'. 4'') Teil einer in den schalenförmigen Halter (3) eingebetteten Einlage (5) ist,
daß der Halter (3) an seiner der Lasche (4, 4', 4'') gegenüberliegenden Seite mit einem Rastelement (10, 10', 10'', 10''', 10^{IV}) zum Halten der Lasche (4, 4', 4'') in Schließstellung versehen ist und
daß die Einlage (5) mit dem Halter (3) im 2-Komponenten-Spritzverfahren hergestellt ist.

2. Befestigungselement nach Anspruch 1,
**dadurch gekennzeichnet,**
daß eine Lasche (4'') einstückig mit der Einlage (5) verbunden ist.

3. Befestigungselement nach Anspruch 1,
**dadurch gekennzeichnet,**
daß zwei im Abstand voneinander angeordnete Laschen (4, 4') einstückig mit der Einlage (5) verbunden sind.

4. Befestigungselement nach Anspruch 3,
**dadurch gekennzeichnet,**
daß die beiden Laschen (4, 4') in Schließstellung parallel verlaufen.

5. Befestigungselement nach Anspruch 3,
**dadurch gekennzeichnet,**
daß die beiden Laschen (4, 4') in Schließstellung kreuzförmig verlaufen.

6. Befestigungselment nach einem der vorhergehenden Ansprüche,
**dadurch gekennzeichnet,**
daß an dem Halter (3) in dem dem Träger (15) zugeordneten Bereich mindestens ein mit dem Träger verbindbares Halteelement (12, 12', 12'', 12''') angeordnet ist.

7. Befestigungselement nach Anspruch 6,
**dadurch gekennzeichnet,**
daß das Halteelement (12, 12', 12'', 12''') als Profilzapfen (22), als federnder Rastarm (23) als Zylindereinsatz (24) oder als Aufnahmeteil (25) für einen an dem Träger (15) angeordnetem Gewindebolzen (26) ausgebildet ist.

8. Befestigungselement nach einem der vorhergehenden Ansprüche,
**dadurch gekennzeichnet,**
daß das Rastelement (10, 10', 10'', 10''', 10^{IV}) hakenförmig oder druckknopfartig ausgebildet ist.

## Claims

1. Fastening element made of plastic, in particular for line sections (2) or pipes, with a shell-shaped holder (3) capable of being fastened to a carrier and with at least one flexible strap (4, 4', 4") which at least partially surrounds the line sections (2), characterized in that the strap (4, 4', 4") is part of a liner (5) embedded into the shell-shaped holder (3), in that the holder (3) is provided, on its side located opposite the strap (4, 4', 4"), with a catch element (10, 10', 10", 10"', 10^{IV}) for holding the strap (4, 4', 4") in the closing position, and in that the liner (5), together with the holder (3), is produced by the two-component injection-moulding method.

2. Fastening element according to Claim 1, characterized in that one strap (4") is integrally connected to the liner (5).

3. Fastening element according to Claim 1, characterized in that two straps (4, 4') arranged at a distance from one another are integrally connected to the liner (5).

4. Fastening element according to Claim 3, characterized in that the two straps (4, 4') run parallel in the closing position.

5. Fastening element according to Claim 3, characterized in that the two straps (4, 4') run crosswise in the closing position.

6. Fastening element according to one of the preceding claims, characterized in that at least one holding element (12, 12', 12'', 12''') capable of being connected to the carrier (15) is arranged on the holder (3) in the region assigned to the carrier.

7. Fastening element according to Claim 6, characterized in that the holding element (12, 12', 12'', 12''') is designed as a profiled dowel (22), as a resilient catch arm (23), as a cylindrical insert (24) or as a receiving part (25) for a threaded bolt (26) arranged on the carrier (15).

8. Fastening element according to one of the preceding claims, characterized in that the catch element (10, 10', 10", 10"', 10^{IV}) is designed to be hook-shaped or in the manner of a press-stud.

## Revendications

1. Élément de fixation en matière plastique, en particulier pour des faisceaux de câbles (2) ou pour des tubes, comprenant un élément porteur (3) en forme de coque susceptible d'être fixé sur un support, et au moins une patte (4, 4', 4") flexible qui entoure au moins partiellement les faisceaux de câbles (2),
caractérisé en ce que :
ladite patte (4, 4', 4") fait partie d'un insert (5) noyé dans l'élément porteur (3) en forme de coque,
ledit élément porteur (3) est pourvu, de son côté opposé à la patte (4, 4', 4"), d'un élément d'enclenchement (10, 10', 10", 10"', 10"") pour maintenir la patte (4, 4', 4") dans la position de fermeture, et
l'insert (5) est fabriqué avec l'élément porteur (3) par un procédé d'injection à deux composants.

2. Élément de fixation selon la revendication 1, caractérisé en ce qu'une patte (4") est reliée d'une seule pièce avec l'insert (5).

3. Élément de fixation selon la revendication 1, caractérisé en ce que deux pattes (4,4') agencées à distance l'une de l'autre sont reliées d'une seule pièce avec l'insert (5).

4. Élément de fixation selon la revendication 3, caractérisé en ce que les deux pattes (4,4') s'étendent parallèlement dans la position de fermeture.

5. Élément de fixation selon la revendication 3, caractérisé en ce que les deux pattes (4,4') s'étendent en croix dans la position de fermeture.

6. Élément de fixation selon l'une des revendications précédentes, caractérisé en ce qu'un élément de maintien (12, 12', 12", 12"') susceptible d'être relié au support est agencé sur l'élément de maintien (3) dans la région associée au support (15).

7. Élément de fixation selon la revendication 6, caractérisé en ce que l'élément de maintien (12, 12', 12", 12"') est réalisé sous forme d'un tenon profilé (22), sous forme d'un bras d'enclenchement élastique (23), sous forme d'un insert cylindrique (24), ou bien sous forme de pièce de réception (25) pour un boulon fileté (26) agencé sur le support (15).

8. Élément de fixation selon l'une des revendications précédentes, caractérisé en ce que l'élément d'enclenchement (10, 10', 10", 10"', 10"") est réalisé sous forme de crochet, ou bien sous forme de bouton-pression.
